(19) Europäisches Patentamt
European Patent Office
Office européen des brevets

(11) EP 2 634 218 A1

(12) # EUROPEAN PATENT APPLICATION
published in accordance with Art. 153(4) EPC

(43) Date of publication:
**04.09.2013 Bulletin 2013/36**

(21) Application number: **11835941.3**

(22) Date of filing: **23.08.2011**

(51) Int Cl.:
***C08L 69/00*** *(2006.01)*
***C08G 64/02*** *(2006.01)*
***C08K 3/32*** *(2006.01)*
***C08K 5/3492*** *(2006.01)*

(86) International application number:
**PCT/JP2011/068963**

(87) International publication number:
**WO 2012/056800 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2010 JP 2010244342**

(71) Applicants:
- **Mitsubishi Chemical Corporation**
  **Chiyoda-ku**
  **Tokyo 100-8251 (JP)**
- **Mitsubishi Plastics, Inc.**
  **Tokyo 100-8252 (JP)**

(72) Inventors:
- **YOKOGI Masashi**
  **Fukuoka 806-004 (JP)**
- **TANAKA Kazuya**
  **Fukuoka 806-004 (JP)**

(74) Representative: **Vossius & Partner**
**Siebertstrasse 4**
**81675 München (DE)**

(54) **RESIN COMPOSITION AND FILM, PLATE AND INJECTION MOLDING OBTAINED BY MOLDING SAME**

(57) An object of the present invention is to provide a resin composition which is excellent in terms of all of fire retardancy, impact resistance and heat resistance. The present invention relates to a resin composition which includes: a polycarbonate resin (A) that contains structural units (a) derived from a dihydroxy compound having the portion represented by the following formula (1) as part of the structure thereof; and a flame retardant (B) that contains phosphorus and nitrogen, wherein a test specimen produced from the resin composition in accordance with JIS K7110 has an Izod impact strength of 5.0 kJ/$m^2$ or higher and a molded article obtained by molding the resin composition has a rating of V-0 in a UL94 vertical burning test. (Provided that the case where the portion represented by formula (1) is part of -$CH_2$-O-H is excluded.)

[Chem. 1]

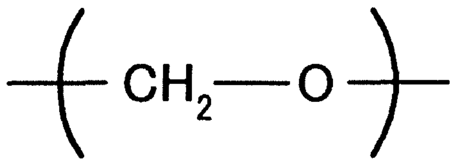

(1)

EP 2 634 218 A1

**Description**

Technical Field

The present invention relates to a resin composition having excellent fire retardancy, impact resistance and heat resistance, and to a film, a plate and a molded article which are obtained by molding the resin composition.

Background Art

Aromatic polycarbonate resins are in wide use as engineering plastics having excellent heat resistance, impact resistance and transparency in various applications including the fields of motor vehicles and OA appliances. Meanwhile, such aromatic polycarbonate resins are generally produced using starting materials induced from petroleum resources. However, in view of the current circumstances in which there is a fear about depletion of petroleum resources, it is desired to supply molded articles of plastics produced using a starting material obtained from biomass resources, e.g., plants. Furthermore, since there is a fear about a possibility that the global warming due to the increase in carbon dioxide emission and to the accumulation of carbon dioxide might bring about climate changes, etc., it is desired to develop molded-plastic materials or parts which are produced from a plastic obtained from a plant-derived monomer as a starting material and which are carbon-neutral even when discarded after use. This request is strong especially in the field of large molded articles.

In order to meet such a request, patent document 1 has proposed a technique in which isosorbide is used as a plant-derived monomer to obtain a polycarbonate through transesterification with diphenyl carbonate. In patent document 2, a polycarbonate obtained through copolymerization with bisphenol A has been proposed as a copolycarbonate obtained by copolymerizing isosorbide and another dihydroxy compound. Furthermore, an attempt has been made to copolymerize isosorbide and an aliphatic diol to thereby mitigate the stiffness of a homo-polycarbonate obtained from isosorbide, as described in patent document 3. Meanwhile, a large number of polycarbonates obtained by polymerizing 1,4-cyclohexanedimethanol, which is an alicyclic dihydroxy compound, have been proposed in patent document 4 and patent document 5.

Although polycarbonates produced using isosorbide have been proposed as shown above, no resin which fully satisfies the fire retardancy, impact resistance and heat resistance which are required for application to large molded articles has been provided so far. In addition, the properties disclosed in those documents are limited to glass transition temperature and basic mechanical properties, and the documents do not include a sufficient disclosure concerning fire retardancy, impact resistance and heat resistance, which are important for application to the large molded articles.

In order to overcome such a problem, patent document 6 has disclosed a resin composition obtained by incorporating 1 to 60 parts by mass (0.01 to 37.5% by mass) of a flame retardant having a heat decomposition temperature of 340°C or lower into 100 parts by mass of a polycarbonate resin produced by polymerizing an ether diol, e.g., isosorbide. In patent document 7 has been disclosed a resin composition obtained by incorporating 20 to 200 parts by mass (16.7 to 66.7% by mass) of a metal hydroxide into 100 parts by mass of a polycarbonate resin produced by polymerizing an ether diol, e.g., isosorbide. Furthermore, in patent document 8 has been disclosed a resin composition obtained by incorporating 1 to 100 parts by mass (0.01 to 50% by mass) of a specific organophosphorus compound into 100 parts by mass of a polycarbonate resin produced by polymerizing an ether diol, e.g., isosorbide.

Background Art Document

Patent Document

Patent Document 1: British Patent No. 1079686, description
Patent Document 2: JP-A-56-55425
Patent Document 3: International Publication No. 2004/111106
Patent Document 4: JP-A-6-145336
Patent Document 5: JP-B-63-12896
Patent Document 6: International Publication No. 2008/149872
Patent Document 7: JP-A-2009-249621
Patent Document 8: JP-A-2010-001362

## Summary of Invention

### Problem that Invention is to Solve

However, the resin composition disclosed in patent document 6 not only has insufficient impact resistance because the proportion of isosorbide is substantially high but also is insufficient in fire retardancy in applications where a higher level of fire retardancy is required. Moreover, the resin compositions disclosed in patent document 7 and patent document 8 have a fire retardancy level of V-2 in a UL94 vertical burning test, and do not satisfy a fire retardancy level of V-0 in a UL94 vertical burning test, which is required for use as general large molded articles, etc.

As described above, it has been extremely difficult, with the techniques described above, to provide a resin composition which is excellent in terms of all of fire retardancy, impact resistance and heat resistance.

Accordingly, in view of such problems of the conventional-art techniques, an object of the invention is to provide a resin composition which is excellent in terms of all of fire retardancy, impact resistance and heat resistance.

### Means for Solving Problem

The present inventors diligently made investigations. As a result, the inventors have found that a resin composition which includes both a polycarbonate resin derived from a dihydroxy compound having a specific structure and a specific flame retardant and has an Izod impact strength within a specific range and which, when molded into a molded article having a specific thickness, has a rating of V-0 in a UL94 vertical burning test is capable of overcoming all the problems described above. The invention has been thus accomplished.

That is, the present invention is as follows.

[1] A resin composition, comprising:

a polycarbonate resin (A) that contains structural units (a) derived from a dihydroxy compound having a portion represented by the following formula (1) as a part of a structure thereof; and
a flame retardant (B) that contains phosphorus and nitrogen,
wherein a test specimen produced from the resin composition in accordance with JIS K7110 has an Izod impact strength of 5.0 $kJ/m^2$ or higher, and
a molded article having a thickness of 3.0 mm obtained by molding the resin composition has a rating of V-0 in a UL94 vertical burning test:

[Chem. 1]

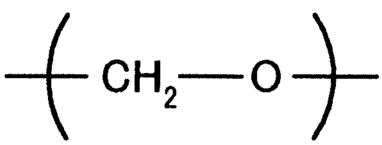

(1)

(provided that a case where the portion represented by formula (1) is a part of $-CH_2-O-H$ is excluded.)

[2] The resin composition as described in [1] above,
wherein a molded article having a thickness of 2.0 mm obtained by molding the resin composition has a rating of V-0 in a UL94 vertical burning test.
[3] The resin composition as described in [1] or [2] above,
wherein a molded article having a thickness of 1.0 mm obtained by molding the resin composition has a rating of V-0 in a UL94 vertical burning test.
[4] The resin composition as described in any one of [1] to [3] above,
wherein the dihydroxy compound is a dihydroxy compound represented by the following formula (2):

[Chem. 2]

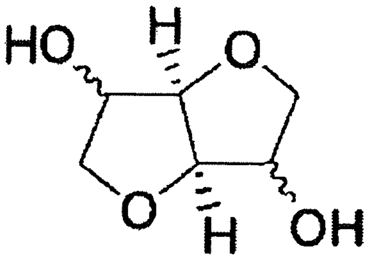

(2)

.

[5] The resin composition as described in any one of [1] to [4] above,
wherein the polycarbonate resin (A) has a glass transition temperature of 75 to 140°C.
[6] The resin composition as described in any one of [1] to [5] above,
wherein the polycarbonate resin (A) contains the structural units (a) in an amount of 60% by mole or less.
[7] The resin composition as described in any one of [1] to [6] above,
wherein a proportion of the flame retardant (B) in a mixture of the polycarbonate resin (A) and the flame retardant (B) is 35 to 60% by mass.
[8] The resin composition as described in any one of [1] to [7] above,
wherein the flame retardant (B) has a phosphorus content of 20 to 35% by mass and a nitrogen content of 10 to 25% by mass.
[9] The resin composition as described in any one of [1] to [8] above,
wherein the polycarbonate resin (A) further contains structural units (b) derived from cyclohexanedimethanol.
[10] The resin composition as described in [9] above,
wherein the polycarbonate resin (A) contains the structural units (b) in an amount of 40 to 80% by mole.
[11 The resin composition as described in any one of [1] to [10] above, further comprising:

an aromatic polycarbonate resin (C),
wherein the resin composition has a single glass transition temperature, and
the glass transition temperature is not lower than a glass transition temperature of the polycarbonate resin (A) and not higher than a glass transition temperature of the aromatic polycarbonate resin (C).

[12] The resin composition as described in [11] above,
wherein a proportion of the aromatic polycarbonate resin (C) in a mixture of the polycarbonate resin (A), the flame retardant (B) and the aromatic polycarbonate resin (C) is 5 to 50% by mass.
[13] A film, which is obtained by molding the resin composition as described in any one of [1] to [12] above.
[14] A plate, which is obtained by molding the resin composition as described in any one of [1] to [12] above.
[15] An injection-molded article, which is obtained by molding the resin composition as described in any one of [1] to [12] above.

Effects of Invention

According to the Invention, it is possible to provide a resin composition which combines all of fire retardancy, impact resistance and heat resistance.

Mode for Carrying Out Invention

An explanation is given below on the resin composition as an example of embodiments of the invention. However, the scope of the invention should not be construed as being limited to the embodiments described below.
The term "% by mass" and "parts by mass" have the same meanings as "% by weight" and "parts by weight", respectively.
In this description, the expression "contained as a main component" is a conception which means that the resin composition is permitted to contain other component(s) unless the effects of the resin which constitutes the resin composition are lessened thereby. Furthermore, although that expression does not limit the content thereof to a specific value, the component accounts for 50% by mass or more, preferably 60% by mass or more, more preferably 70% by mass or more, but up to 100% by mass, of all components of the resin composition.

<Polycarbonate Resin (A)>

The polycarbonate resin (A) to be used in the invention is a polycarbonate resin that contains structural units (a) derived from a dihydroxy compound having the portion represented by the following formula (1) as part of the structure thereof.

[Chem. 3]

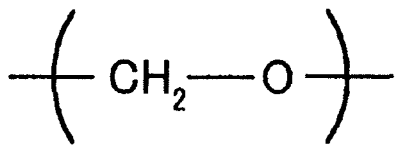

(1)

(Provided that the case where the portion represented by formula (1) is part of $-CH_2-O-H$ is excluded.) Namely, the dihydroxy compound is a compound which at least contains two hydroxyl groups and further contains the portion of formula (1).

The main component of the dihydroxy compound having the portion represented by formula (1) as part of the structure thereof is not particularly limited so long as the molecule thereof has the structure represented by formula (1) therein. Specific examples thereof include compounds which have an aromatic group as a side chain and have, in the main chain, ether groups each bonded to an aromatic group, such as
9,9-bis(4-(2-hydroxyethoxy)phenyl)fluorene,
9,9-bis(4-(2-hydroxyethoxy)-3-methylphenyl)fluorene,
9,9-bis(4-(2-hydroxyethoxy)-3-isopropylphenyl)fluorene,
9,9-bis(4-(2-hydroxyethoxy)-3-isobutylphenyl)fluorene,
9,9-bis(4-(2-hydroxyethoxy)-3-tert-butylphenyl)fluorene,
9,9-bis(4-(2-hydroxyethoxy)-3-cyclohexylphenyl)fluorene,
9,9-bis(4-(2-hydroxyethoxy)-3-phenylphenyl)fluorene,
9,9-bis(4-(2-hydroxyethoxy)-3,5-dimethylphenyl)fluorene,
9,9-bis(4-(2-hydroxyethoxy)-3-tert-butyl-6-methylphenyl)fluorene, and
9,9-bis(4-(3-hydroxy-2,2-dimethylpropoxy)phenyl)fluorene. Examples thereof further include dihydroxy compounds having a cyclic ether structure which are represented, for example, by dihydroxy compounds represented by the following formula (2) and by spiro glycols represented by the following formula (3). Preferred of these are the dihydroxy compounds having a cyclic ether structure. Especially preferred among the dihydroxy compounds having a cyclic ether structure are anhydrous sugar alcohols such as those represented by formula (2). More specifically, examples of the dihydroxy compounds represented by formula (2) include isosorbide, isomannide and isoidide, which are stereoisomers. Examples of the dihydroxy compounds represented by the following formula (3) include 3,9-bis(1,1-dimethyl-2-hydroxyethyl)-2,4,8,10-tetraoxaspiro(5.5)undecane (common name, spiro glycol), 3,9-bis(1,1-diethyl-2-hydroxyethyl)-2,4,8,10-tetraoxaspiro(5.5)undecane, and 3,9-bis(1,1-dipropyl-2-hydroxyethyl)-2,4,8,10-tetraoxaspiro(5.5)undecane.
One of these compounds may be used alone, or two or more thereof may be used in combination.
[Chem. 4]

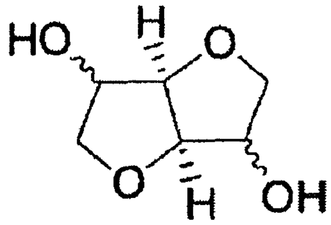

(2)

[Chem. 5]

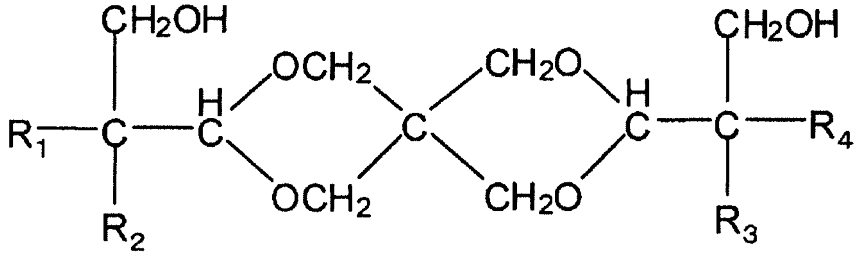

(3)

(In formula (3), $R_1$ to $R_4$ each independently are an alkyl group having 1 to 3 carbon atoms.)

It is most preferred to use isosorbide among those dihydroxy compounds; isosorbide is industrially easily available and is induced from a plant-derived starting material. Those dihydroxy compounds may be used alone or in combination of two or more thereof.

The proportion of the structural units (a) in the polycarbonate resin (A) to be used in the invention is preferably 60% by mole or less, more preferably 55% by mole or less, especially preferably 50% by mole or less. The lower limit thereof is preferably 20% by mole or higher, more preferably 25% by mole or higher, especially preferably 30% by mole or higher.

Proportions of the structural units (a) not higher than 60% by mole are preferred because impact resistance can be imparted in this case to the resin composition of the invention. Meanwhile, proportions thereof not less than 20% by mole are preferred because heat resistance can be imparted in this case to the resin composition of the invention and because especially when the structural units (a) are structural units derived from isosorbide, the proportion of units derived from a plant-derived starting material can be heightened.

The polycarbonate resin (A) to be used in the invention can further contain structural units other than the structural units (a). Examples thereof include structural units derived from the aliphatic dihydroxy compounds described in International Publication No. 2004/111106 and structural units derived from the alicyclic dihydroxy compounds described in International Publication No. 2007/148604.

It is preferred that the polycarbonate resin (A) should contain structural units derived from at least one compound selected from ethylene glycol, 1,3-propanediol, 1,4-butanediol, 1,5-pentanediol and 1,6-hexanediol, among the structural units derived from those aliphatic dihydroxy compounds.

It is preferred that structural units including a 5-membered cyclic structure or 6-membered cyclic structure should be contained among the structural units derived from those alicyclic dihydroxy compounds. The 6-membered cyclic structure may be in a chair or boat form which has been fixed by means of covalent bonding. By introducing structural units derived from an alicyclic dihydroxy compound of a 5-membered cyclic structure or 6-membered cyclic structure, the resin obtained can be made to have enhanced heat resistance. The number of the carbon atoms contained in the alicyclic dihydroxy compound is generally 70 or less, preferably 50 or less, more preferably 30 or less.

Examples of the alicyclic dihydroxy compounds containing a 5-membered cyclic structure or 6-membered cyclic structure include the compounds described in International Publication No. 2007/148604, cited above. Preferred examples thereof include cyclohexanedimethanol, tricyclodecanedimethanol, adamantanediol and pentacyclopentadecanedimethanol. These compounds may be used alone or in combination of two or more thereof.

It is preferred that the polycarbonate resin (A) to be used in the invention should have structural units (b) derived

from cyclohexanedimethanol, as structural units other than the structural units (a), among structural units derived from the aliphatic dihydroxy compounds and structural units derived from the alicyclic dihydroxy compounds. Incidentally, 1,4-cyclohexanedimethanol, which is easily available industrially, is preferred among cyclohexanedimethanol.

The proportion of the structural units (b) in the polycarbonate resin (A) is preferably 40 to 80% by mole, more preferably 45 to 75% by mole, even more preferably 50 to 70% by mole, from the standpoints of impact resistance and heat resistance. By regulating the proportion of the structural units (b) to a value within that range, not only the polycarbonate resin (A) can be made to have excellent heat resistance but also a resin composition having sufficient impact strength can be provided even when the flame retardant (B), which will be described later, is incorporated into the resin (A). This resin composition hence is usable in a wide range of applications.

The reduced viscosity of the polycarbonate resin (A), which is an index to the molecular weight thereof, is determined by using methylene chloride as a solvent to prepare a solution having a polycarbonate concentration precisely adjusted to 0.60 g/dl and examining the solution with an Ubbelohde viscometer at a temperature of 20.0±0.1°C. The reduced viscosity thereof is in the range of generally 0.20 to 1.0 dl/g, preferably 0.30 to 0.80 dl/g. Reduced viscosities of the polycarbonate resin (A) not less than 0.20 dl/g are preferred because molded articles of various shapes obtained by molding the resin composition of the invention have sufficient mechanical strength. Reduced viscosities of the polycarbonate resin (A) not higher than 1.0 dl/g are preferred because the resin composition shows satisfactory flowability during molding and this not only improves productivity but also is less apt to result in appearance failures such as flow marks.

The polycarbonate resin (A) has a glass transition temperature of preferably 75°C or higher, more preferably 78°C or higher, especially preferably 80°C or higher. The glass transition temperature thereof is preferably 140°C or lower, more preferably 130°C or lower, especially preferably 120°C or lower.

Glass transition temperatures thereof not lower than 75°C are preferred because this polycarbonate resin (A) can impart heat resistance to the resin composition of the invention. Glass transition temperatures thereof not higher than 140°C are preferred because this polycarbonate resin (A) does not impair the impact resistance of the resin composition of the invention.

The polycarbonate resin (A) can be produced by a polymerization method in general use. For example, either a phosgene process or a transesterification process in which dihydroxy compounds are reacted with a carbonic diester may be used. Of these, the transesterification process is preferred in which a dihydroxy compound having the portion represented by formula (1) as part of the structure thereof, cyclohexanedimethanol, other dihydroxy compound(s) used according to need, and a carbonic diester are reacted in the presence of a polymerization catalyst. The transesterification process is a technique of production in which the dihydroxy compound having the portion represented by formula (1) as part of the structure thereof, cyclohexanedimethanol, other dihydroxy compound(s) used according to need, and a carbonic diester are subjected to transesterification reaction after a basic catalyst and an acidic substance for neutralizing the basic catalyst are added thereto.

Representative examples of the carbonic diester include diphenyl carbonate, ditoryl carbonate, bis(chlorophenyl) carbonate, m-cresyl carbonate, dinaphthyl carnate, bis(biphenyl) carbonate, diethyl carbonate, dimethyl carbonate, dibutyl carbonate and dicyclohexyl carbonate. Of these, diphenyl carbonate is especially preferred.

<Flame Retardant (B)>

It is important that the flame retardant (B) to be used in the invention should contain phosphorus and nitrogen. The simultaneous inclusion of phosphorus and nitrogen makes it possible to improve, in particular, the fire retardancy of the resin composition of the invention.

It is especially preferred that the flame retardant (B) should have a phosphorus content of 20 to 35% by mass and a nitrogen content of 10 to 25% by mass. A more preferred range of the phosphorus content is 22 to 33% by mass, and an even more preferred range thereof is 25 to 30% by mass. A more preferred range of the nitrogen content is 12 to 23% by mass, and an even more preferred range thereof is 15 to 20% by mass.

By regulating the flame retardant (B) so as to have a phosphorus content of 20% by mass or higher and a nitrogen content of 10% by mass or higher, excellent fire retardancy can be imparted to the resin composition of the invention. Meanwhile, phosphorus contents thereof not higher than 35% by mass and nitrogen contents thereof not higher than 25% by mass are suitable because this flame retardant does not impair the heat resistance of the resin composition of the invention.

The flame retardant (B) may be either a single compound or a mixture of a plurality of compounds.

As the flame retardant (B), use can be made of melamine phosphate, melamine polyphosphate, ammonium phosphate, ammonium polyphosphate, or a mixture of any of these compounds and a triazine compound such as melamine or melamine cyanurate. From the standpoints of fire retardancy, heat resistance and impact resistance, a flame retardant which includes ammonium polyphosphate as a main component is preferred of these. A mixture thereof and the triazine compound is more preferred.

Commercially available examples of the flame retardant (B) include "TAIEN" Series, manufactured by Taihei Chemical Industrial Co., Ltd., "FIRE CUT P-770", manufactured by Suzuhiro Chemical Co., Ltd., and "ADK STAB FP-2100J" and "ADK STAB 2200", manufactured by Asahi Denka Kogyo K.K.

The flame retardant (B) can be subjected to a surface treatment. With respect to the kind of surface treatment, use can be made of a silane coupling agent, such as epoxysilane, vinylsilane, methacrylic silane, aminosilane or isocyanatosilane, a titanate coupling agent, a higher fatty acid, or a polymer such as a melamine resin. By subjecting the flame retardant (B) to a surface treatment, the dispersibility thereof in the polycarbonate resin (A) can be improved.

It is preferred in the resin composition of the invention that the proportion of the flame retardant (B) in the mixture of the polycarbonate resin (A) and the flame retardant (B) should be 35 to 60% by mass. A more preferred range of the incorporation amount of the flame retardant (B) is 38 to 60% by mass, an even more preferred range thereof is 40 to 55% by mass, and an especially preferred range thereof is 40 to 50% by mass.

So long as the proportion of the flame retardant (B) incorporated is 35% by mass or higher, excellent fire retardancy can be imparted to the resin composition of the invention. Such proportions thereof are hence preferred. Meanwhile, so long as the proportion of the flame retardant (B) incorporated is 60% by mass or less, the resin composition of the invention can be made to retain practically sufficient impact resistance and heat resistance. Such proportions thereof are hence preferred.

<Aromatic Polycarbonate Resin (C)>

An aromatic polycarbonate resin (C) can be incorporated in order to further improve the heat resistance and mechanical properties of the resin composition of the invention. The aromatic polycarbonate resin (C) may be either a homopolymer or a copolymer. The aromatic polycarbonate resin (C) may have either a branched structure or a linear structure, or may be a mixture of a branched structure and a linear structure.

For producing the aromatic polycarbonate resin (C) to be used in the invention, any known process such as, for example, a phosgene process, a transesterification process, or a pyridine process may be used. A process for producing the aromatic polycarbonate resin by a transesterification process is explained below as an example.

The transesterification process is a production process in which a dihydric phenol and a carbonic diester are subjected to melt transesterification polycondensation together with a basic catalyst and an acidic substance for neutralizing the basic catalyst. Representative examples of the dihydric phenol include bisphenols, and it is especially preferred to use 2,2-bis(4-hydroxyphenyl)propane, i.e., bisphenol A. Some or all of the bisphenol A may be replaced with one or more other dihydric phenols. Examples of the other dihydric phenols include hydroquinone, 4,4-dihydroxydiphenyl, bis(4-hydroxyphenyl)alkanes such as bis(4-hydroxyphenyl)methane and 1,1-bis(4-hydroxyphenyl)ethane, bis (4-hydroxyphenyl)cycloalkanes such as 1,1-bis(4-hydroxyphenyl)cyclohexane, compounds such as bis(4-hydroxyphenyl) sulfide, bis(4-hydroxyphenyl) sulfone, bis(4-hydroxyphenyl) sulfoxide, and bis(4-hydroxyphenyl) ether, alkylated bisphenols such as 2,2-bis(3-methyl-4-hydroxyphenyl)propane and 2,2-bis(3,5-dimethyl-4-hydroxyphenyl)propane, and halogenated bisphenols such as 2,2-bis(3,5-dibromo-4-hydroxyphenyl)propane and 2,2-bis(3,5-dichloro-4-hydroxyphenyl)propane.

Representative examples of the carbonic diester include diphenyl carbonate, ditoryl carbonate, bis(chlorophenyl) carbonate, m-cresyl carbonate, dinaphthyl carnate, bis(biphenyl) carbonate, diethyl carbonate, dimethyl carbonate, dibutyl carbonate and dicyclohexyl carbonate. Especially preferred of these is diphenyl carbonate.

The weight-average molecular weight of the aromatic polycarbonate resin (C) to be used in the invention is in the range of generally 10,000 to 100,000, preferably 20,000 to 50,000, from the standpoint of a balance between mechanical properties and moldability. In the invention, one aromatic polycarbonate resin may be used alone as the aromatic polycarbonate resin (C) or a mixture of two or more aromatic polycarbonate resins may be used as the resin (C).

<Glass Transition Temperature of the Resin Composition>

In the case where the resin composition of the invention further contains the aromatic polycarbonate resin (C) besides the polycarbonate resin (A) and the flame retardant (B), this resin composition (hereinafter referred to also as "present resin composition") is a resin composition characterized by having a single glass transition temperature.

That the present resin composition has a single glass transition temperature means that when the present resin composition is examined for the temperature dispersion of dynamic viscoelasticity under the conditions of a strain of 0.1%, frequency of 10 Hz, and heating rate of 3 °C/min (dynamic viscoelasticity measurement according to JIS K7198, method A (1991)), then the loss tangent (tan$\delta$) has one main-dispersion peak, in other words, the loss tangent (tan$\delta$) has one maximum. Since the present resin composition has a single glass transition temperature, molded articles produced using the present resin composition can have excellent transparency.

That the present resin composition has a single glass transition temperature means also that when the present resin composition is examined by the dynamic viscoelasticity measurement, then the loss modulus (E") has one main-dispersion peak, in other words, the loss modulus (E") has one maximum.
Besides the dynamic viscoelasticity measurement, differential scanning calorimetry or the like can be used to ascertain that the composition has a single glass transition temperature. Specifically, the present resin composition can be considered to be a composition which, when examined with a differential scanning calorimeter (DSC) at a heating rate of 10°C/min in accordance with JIS K7121 (1987), gives only one inflection point that indicates a glass transition temperature.

In general, that a polymer blend composition has a single glass transition temperature means that the resins which have been mixed with each other are in the state of having been compatibilized on a molecular level. This composition can be considered to be a compatibilized system.

The glass transition temperature of the present resin composition is expressed in terms of the temperature which shows the main-dispersion peak of loss tangent (tanδ) determined by the examination of temperature dispersion of dynamic viscoelasticity. Namely, since the present resin composition has a single glass transition temperature, it can be considered that the polycarbonate resin (A) and the aromatic polycarbonate resin (C) have excellent compatibility with each other. Furthermore, the glass transition temperature appears in the range of temperatures which are not lower than the glass transition temperature of the polycarbonate resin (A) and are not higher than the glass transition temperature of the aromatic polycarbonate resin (C). Consequently, the present resin composition is a resin composition which is excellent in terms of not only heat resistance and impact resistance but also transparency.

The proportion of the aromatic polycarbonate resin (C) in the mixture of the polycarbonate resin (A), the flame retardant (B) and the aromatic polycarbonate resin (C) is preferably 5 to 50% by mass, more preferably 10 to 40% by mass, even more preferably 15 to 35% by mass. By regulating the proportion of the aromatic polycarbonate resin (C) to 5 to 50% by mass, the composition is rendered excellent in terms of heat resistance and impact resistance and also of flowability, without impairing the weatherability. Consequently, it is possible to provide a resin composition which is highly suitable also for applications where the composition is mainly used outdoors.

<Other Additives>

[Heat Stabilizer]

A heat stabilizer can be incorporated into the resin composition of the invention in order to prevent the composition from suffering a decrease in molecular weight or a deterioration in hue during molding. Examples of the heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl) pentaerythritol diphosphite, 2,2-methylenebis(4,6-di-tert-butylphenyl) octyl phosphite, bis(nonylphenyl) pentaerythritol diphosphite, bis(2,4-di-tert-butylphenyl) pentaerythritol diphosphite, distearyl pentaerythritol diphosphite, tributyl phosphate, triethyl phosphate, trimethyl phosphate, triphenyl phosphate, diphenyl mono-ortho-xenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate and dipropyl benzenephosphonate. Preferred of these are trisnonylphenyl phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate.
One of these heat stabilizers may be used alone, or two or more thereof may be used in combination.

The amount of the heat stabilizer to be incorporated per 100% by mass the resin composition of the invention is preferably 0.0001 to 1% by mass, more preferably 0.0005 to 0.5% by mass, even more preferably 0.001 to 0.2% by mass. By incorporating a heat stabilizer in an amount within that range, the resins can be prevented from decreasing in molecular weight or discoloring, without causing bleeding of the additive, etc.

[Antioxidant]

A generally known antioxidant can be incorporated into the resin composition of the invention for the purpose of oxidation prevention. Examples of the antioxidant include one or more of pentaerythritol tetrakis(3-mercaptopropionate), pentaerythritol tetrakis(3-laurylthiopropionate), glycerol 3-stearylthiopropionate, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], pentaerythritol tetrakis[3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamamide), diethyl 3,5-di-tert-butyl-4-hydroxybenzylphosphonate, tris(3,5-di-tert-butyl-4-hydroxybenzyl) isocyanurate, tetrakis(2,4-di-tert-butylphenyl) 4,4'-biphenylenediphosphinate, 3,9-bis {1,1-dimethyl-2-[β-(3-tert-butyl-4-hydroxy-5-methylphenyl)propionyloxy]ethyl}-2,4,8, 10-tetraoxaspiro(5,5)undecane, and the like. The amount of

the antioxidant to be incorporated per 100% by mass the resin composition of the invention is preferably 0.0001 to 1% by mass, more preferably 0.0005 to 0.5% by mass, even more preferably 0.001 to 0.2% by mass. By incorporating an antioxidant in an amount within that range, the resins can be prevented from oxidatively deteriorating, without causing bleeding of the antioxidant and while preventing various molded articles of the resin composition from having reduced mechanical properties.

[Lubricant]

A lubricant can be incorporated into the resin composition of the invention for the purpose of imparting surface lubricity to the resin composition. Examples of the lubricant include higher fatty acid esters of mono- or polyhydric alcohols, higher fatty acids, paraffin waxes, bees wax, olefin waxes, olefin waxes containing carboxy groups and/or carboxylic anhydride groups, silicone oils and organopolysiloxanes.

The higher fatty acid esters preferably are partial or complete esters of mono- or polyhydric alcohols having 1 to 20 carbon atoms with saturated fatty acids having 10 to 30 carbon atoms. Examples of the partial or complete esters of mono- or polyhydric alcohols with saturated fatty acids include stearic acid monoglyceride, stearic acid diglyceride, stearic acid triglyceride, stearic acid monosorbitate, stearyl stearate, behenic acid monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate. Preferred of these are stearic monoglyceride, stearic triglyceride, pentaerythritol tetrastearate, and behenyl behenate. The higher fatty acids preferably are saturated fatty acids having 10 to 30 carbon atoms. Examples of such fatty acids include myristic acid, lauric acid, palmitic acid, stearic acid and behenic acid. One of these lubricants may be used alone, or a mixture of two or more thereof may be used. The amount of the lubricant to be incorporated per 100% by mass the resin composition of the invention is preferably 0.0001 to 1% by mass, more preferably 0.0005 to 0.5% by mass, even more preferably 0.001 to 0.2% by mass. By incorporating a lubricant in an amount within that range, surface lubricity can be imparted to the resin composition, without causing bleeding of the lubricant and while preventing various molded articles of the resin composition from having reduced mechanical properties.

[Ultraviolet Absorber or Light Stabilizer]

Furthermore, an ultraviolet absorber or a light stabilizer can be incorporated for the purpose of further improving the weatherability of the resin composition of the invention. Examples of the ultraviolet absorber or light stabilizer include 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis($\alpha$,$\alpha$-dimethylbenzyl)phenyl]-2H-benzotriazole, 2,2'-methylenebis(4-cumyl-6-benzotriazolephenyl), and 2,2'-p-phenylenebis(1,3-benzoxazin-4-one). Ultraviolet absorbers having a melting point in the range of, in particular, 120 to 250°C are preferred. When an ultraviolet absorber having a melting point of 120°C or higher is used, the surface dulling of molded articles due to gas is mitigated. Specifically, use may be made of benzotriazole-based ultraviolet absorbers such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)phenol, and 2-(2-hydroxy-3,5-dicumylphenyl)benzotriazole. Especially preferred of these are 2-(2-hydroxy-3,5-dicumylphenyl)benzotriazole and 2,2-methylenebis[4-(1,1,3,3-tetramethylbutyl)-6-(2H-benzotriazol-2-yl)phenol. These ultraviolet absorbers or light stabilizers may be used alone or in combination of two or more thereof. The amount of the ultraviolet absorber or light stabilizer to be incorporated per 100% by mass the resin composition of the invention is preferably 0.0001 to 1% by mass, more preferably 0.0005 to 0.5% by mass, even more preferably 0.001 to 0.2% by mass. By incorporating an ultraviolet absorber or light stabilizer in an amount within that range, the weatherability of the resin composition can be improved without causing bleeding of the ultraviolet absorber or light stabilizer and while preventing various molded articles of the resin composition from having reduced mechanical properties.

[Epoxy Compound]

Moreover, an epoxy compound can be incorporated in order to further improve the hydrolytic resistance of the resin composition of the invention. Examples of the epoxy compound include epoxidized soybean oil, epoxidized linseed oil, phenyl glycidyl ether, allyl glycidyl ether, t-butylphenyl glycidyl ether, 3,4-epoxycyclohexylmethyl 3',4'-epoxycyclohexylcarboxylate, 3,4-epoxy-6-methylcyclohexylmethyl 3',4'-epoxy-6'-methylcyclohexylcarboxylate, 2,3-epoxycyclohexylmethyl 3',4'-epoxycyclohexylcarboxylate, 4-(3,4-epoxy-5-methylcyclohexyl)butyl 3',4'-epoxycyclohexylcarboxylate, 3,4-epoxycyclohexylethylene oxide, cyclohexylmethyl 3,4-epoxycyclohexylcarboxylate, 3,4-epoxy-6-methylcyclohexylmethyl 6'-methylcylohexylcarboxylate, bisphenol A diglycidyl ether, tetrabromobisphenol A glycidyl ether, the diglycidyl

ester of phthalic acid, the diglycidyl ester of hexahydrophthalic acid, bis(epoxydicyclopentadienyl) ether, bis-epoxyethylene glycol, bis(epoxycyclohexyl) adipate, butadiene diepoxide, tetraphenylethylene epoxide, octyl epoxythalate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl 2,2-dimethyl-3,4-epoxycyclohexylcarboxylate, N-butyl 2,2-dimethyl-3,4-epoxycyclohexylcarboxylate, cyclohexyl 2-methyl-3,4-epoxycyclohexylcarboxylate, N-butyl 2-isopropyl-3,4-epoxy-5-methylcyclohexylcarboxylate, octadecyl 3,4-epoxycyclohexylcarboxylate, 2-ethylhexyl 3',4'-epoxycyclohexylcarboxylate, 4,6-dimethyl-2,3-epoxycyclohexyl 3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, and di-N-butyl 3-tbutyl-4,5-epoxy-cis-1,2-cyclohexyldicarboxylate. Bisphenol A diglycidyl ether is preferred from the standpoints of compatibility, etc. The amount of the epoxy compound to be incorporated per 100% by mass the resin composition of the invention is preferably 0.0001 to 5% by mass, more preferably 0.001 to 1% by mass, even more preferably 0.005 to 0.5% by mass. By incorporating an epoxy compound in an amount within that range, the hydrolytic resistance of the resin composition can be improved without causing bleeding of the epoxy compound and while preventing various molded articles of the resin composition from having reduced mechanical properties.

Other resins and additives such as a plasticizer, pigment, dye and filler can be further incorporated into the resin composition of the invention besides the ingredients described above, unless the incorporation thereof lessens the features including fire retardancy, impact resistance and heat resistance.

<Applications of the Resin Composition>

The resin composition of the invention can be molded into a film, a plate, an injection-molded article, or the like. Specific examples include: a method in which raw materials including the polycarbonate resin (A) and the flame retardant (B) and optionally further including the aromatic polycarbonate resin (C), other resins, additives, etc. are directly mixed together and the mixture is introduced into an extruder or an injection-molding machine and molded; and a method in which a twin-screw extruder is used to melt-mix the raw materials and extrude the mixture into a strand form to produce pellets and the pellets are thereafter introduced into an extruder or an injection-molding machine and molded. In either method, it is necessary to take account of a decrease in the molecular weight of the polycarbonate resin (A) due to hydrolysis. From the standpoint of evenly mixing the raw materials, it is preferred to select the latter method. The latter production method is hence explained below.

The polycarbonate resin (A), the flame retardant (B), and optional ingredients, such as the aromatic polycarbonate resin (C), other resins, and additives, are sufficiently dried to remove the moisture and then melt-mixed using a twin-screw extruder, and the mixture is extruded into a strand form to produce pellets. In this operation, it is preferred to suitably select a melt extrusion temperature while taking account, for example, of the fact that the viscosity changes depending on the composition of each raw material and on the proportions of the raw materials. Specifically, the molding temperature is preferably 220 to 260°C, more preferably 230 to 250°C, even more preferably 230 to 240°C.

The pellets produced by the method described above are sufficiently dried to remove the moisture. Thereafter, the pellets can be molded into a film, plate or injection-molded article by the following method.

For the film and plate molding, use can be made of roll stretching, tenter stretching, a tubular method or an inflation method. Also usable, besides these, are general techniques for film or plate molding, such as a T-die casting method and a pressing method.

In general, the term "film" means a thin and flat product which has a thickness that is exceedingly small as compared with the length and width thereof, the maximum thickness thereof having been limited at will, and which usually is supplied in the form of a roll (JIS K6900 (1994)). The term "sheet" generally means a flat product which is thin and has a thickness that is small for the length and width thereof, according to the definition given in the JIS. However, there is no clear boundary between the sheet and the film, and there is no need of using terms for discriminating the two in the invention. Consequently, in the invention, the term "film" means any of products which include "sheets", while the term "sheet" means any of products which include "films".

Methods for forming the injection-molded article are not particularly limited. For example, use can be made of injection molding techniques such as general techniques for injection-molding thermoplastic resins, gas-assisted molding, and injection compression molding. Also usable besides these techniques, according to purposes, are in-mold molding, gas-pressing molding, two-color molding, sandwich molding, etc.

The resin composition of the invention has excellent fire retardancy, and can attain a rating of V-0 in a flame test conducted on the basis of the procedure of the UL94 vertical burning test according to a safety standard of Underwriters Laboratories, Inc.

Specifically, a molded article having a thickness of 3.0 mm obtained by molding the resin composition of the invention has a rating of V-0 in the UL94 vertical burning test. It is more preferred that a molded article thereof having a thickness of 2.0 mm should have a rating of V-0 in the UL94 vertical burning test. It is especially preferred that a molded article thereof having a thickness of 1.0 mm should have a rating of V-0 in the UL94 vertical burning test.

Examples of methods for making the resin composition meet the standard include a method in which the phosphorus content and nitrogen content in the flame retardant (B), the proportion of the flame retardant (B) in the mixture of the polycarbonate resin (A) and the flame retardant (B), etc. are regulated so as to be within the ranges shown in this description. However, usable methods should not be construed as being limited to such methods.

The resin composition of the invention has excellent impact resistance. When a No. 2 A test specimen (notched; length, 64.0 mm × width, 12.7 mm × thickness, 4.0 mm) is produced in accordance with JIS K7110 (1999) and examined for Izod impact strength at 23°C with JISL-D, manufactured by Toyo Seiki Seisaku-Sho, Ltd., the test specimen has an Izod impact strength of 5.0 $kJ/m^2$ or higher. The Izod impact strength thereof is more preferably 5.5 $kJ/m^2$ or higher, especially preferably 6.0 $kJ/m^2$ or higher.

Examples of methods for enabling the resin composition to have an Izod impact strength of 5.0 $kJ/m^2$ or higher include a method in which the proportion of the structural units (a) and/or the structural units (b) in the polycarbonate resin (A), the glass transition temperature of the polycarbonate resin (A), the proportion of the flame retardant (B) in the mixture of the polycarbonate resin (A) and the flame retardant (B), etc. are regulated so as to be within the ranges shown in this description. However, usable methods should not be construed as being limited to such methods.

The resin composition of the invention has excellent heat resistance. The resin composition can be made to have a deflection temperature under load of preferably 65°C or higher, more preferably 70°C or higher, especially preferably 75°C or higher; the deflection temperature under load is determined by examining a test specimen in accordance with JIS K7191 (2007) under the conditions of an edgewise load imposed on the specimen of 0.45 MPa.
Examples of methods for enabling the resin composition to have a deflection temperature under load of 65°C or higher include a method in which the proportion of the structural units (b) in the polycarbonate resin (A), the proportion of the flame retardant (B) in the mixture of the polycarbonate resin (A) and the flame retardant (B), etc. are regulated so as to be within the ranges shown in this description. However, usable methods should not be construed as being limited to such methods.

The film, plate or injection-molded article obtained from the resin composition of the invention is excellent in terms of fire retardancy, impact resistance and heat resistance. Consequently, although applications of the resin composition of the invention are not particularly limited, this resin composition can be used, for example, in applications such as building materials, interior parts, films for resin-coated metal sheets, films to be subjected to forming (vacuum/air-pressure forming, hot-press forming, etc.), colored plates, shrink tubes, and injection-molded articles such as automotive interior materials, the housings of domestic electrical appliances, various parts, and parts for OA appliances.

Examples

Examples are shown below, but the invention should not be construed as being limited by the following Examples in any way.
Various properties of raw materials and test specimens shown herein were examined and evaluated in the following manners. Here, the flow direction along which a film runs from the extruder is called the machine direction, and the direction which is perpendicular thereto is called the transverse direction.

(1) Reduced Viscosity

An Ubbelohde viscometer was used in automatic viscometer Type DT-504, manufactured by Chuo Rika Corp., and methylene chloride was used as a solvent to determine the reduced viscosity of a polycarbonate resin sample at a temperature of 20.0±0.1 °C. The measurement was made after the concentration was precisely regulated to 0.60 g/dl. The relative viscosity $\eta_{rel}$ was determined from the flow-down time of the solvent $t_0$ and the flow-down time of the solution t using the following equation.

$$\eta_{rel} = t/t_0$$

The specific viscosity $\eta_{sp}$ was determined from the relative viscosity $\eta_{rel}$ using the following equation.

$$\eta_{sp} = (\eta-\eta_0)/\eta_0 = \eta_{rel}-1$$

The specific viscosity $\eta_{sp}$ was divided by the concentration c (g/dl) to determine the reduced viscosity $\eta_{red}$ using the following equation.

$$\eta_{red} = \eta_{sp}/c$$

The larger the value thereof, the higher the molecular weight.

(2) Fire Retardancy (UL94 Vertical Burning Test)

Test specimens having a length of 135.0 mm, a width of 13.0 mm, and a thickness of 1.0 mm, 2.0 mm, or 3.0 mm were subjected to a flame test conducted on the basis of the procedure of the UL94 vertical burning test according to a safety standard of Underwriters Laboratories, Inc. The number of test specimens of each size was 5. The test specimens which had a rating of V-0 in the UL94 vertical burning test (UL94 V) were regarded as acceptable.

(3) Impact Resistance (Izod Impact Strength)

A No. 2 A test specimen (notched; length, 64.0 mm × width, 12.7 mm × thickness, 4.0 mm) was produced in accordance with JIS K7110 (1999) and examined for Izod impact strength at 23°C with JISL-D, manufactured by Toyo Seiki Seisaku-Sho, Ltd. The test specimens which had an Izod impact strength of 5.0 kJ/$m^2$ or higher were regarded as acceptable.

(4) Heat Resistance (Deflection Temperature under Load)

A test specimen having a length of 120.0 mm, width of 11.0 mm, and thickness of 3.0 mm was produced in accordance with JIS K7191 (2007), and examined for deflection temperature under load using S-3M, manufactured by Toyo Seiki Seisaku-Sho, Ltd. The measurement was made under the conditions of an edgewise load imposed on the specimen of 0.45 MPa. The test specimens which had a deflection temperature under load of 65°C or higher were regarded as acceptable.

In the Examples and Comparative Examples, the following materials were used.

[Polycarbonate Resin (A)]

<(A)-1>

A polycarbonate resin (glass transition temperature, 80°C; reduced viscosity, 0.56 dl/g) obtained through copolymerization by a melt polymerization method so as to result in a [structural units derived from isosorbide]/[structural units derived from 1,4-cyclohexanedimethanol] ratio of 30/70 (mol%).

<(A)-2>

A polycarbonate resin (glass transition temperature, 101°C; reduced viscosity, 0.57 dl/g) obtained through copolymerization by a melt polymerization method so as to result in a [structural units derived from isosorbide]/[structural units derived from 1,4-cyclohexanedimethanol] ratio of 50/50 (mol%).

<(A)-3>

A polycarbonate resin (glass transition temperature, 120°C; reduced viscosity, 0.56 dl/g) obtained through copolymerization by a melt polymerization method so as to result in a [structural units derived from isosorbide]/[structural units derived from 1,4-cyclohexanedimethanol] ratio of 70/30 (mol%).

[Flame Retardant (B)]

<(B)-1>

FIRE CUT P-770 (mixture of ammonium polyphosphate and a triazine compound; phosphorus content, 24% by mass; nitrogen content, 17% by mass), manufactured by Suzuhiro Chemical Co., Ltd.

<(B)-2>

Exolit OP930 (aluminum diethylphosphinate; phosphorus content, 23% by mass; nitrogen content, 0% by mass), manufactured by Clariant AG)

[Aromatic Polycarbonate Resin (C)]

<(C)-1>

Trade name "Iupilon S3000" (glass transition temperature, 150°C; reduced viscosity, 0.49 dl/g), manufactured by Mitsubishi Engineering-Plastics Corp.

(EXAMPLE 1-1)

(A)-1 and (B)-1 were dry-blended with each other in a mass ratio of 60:40 and then compounded at 230°C using a small corotating twin-screw extruder having a diameter of 40 mm manufactured by Mitsubishi Heavy Industries, Ltd., and pellets were produced therefrom. Using injection-molding machine IS50E (screw diameter, 25 mm), manufactured by Toshiba Machine Co., Ltd., the pellets obtained were injection-molded under the conditions of a cylinder temperature of 230°C and a mold temperature of about 70°C to obtain test specimens for fire retardancy evaluation each having a length of 135 mm, a width of 13 mm, and a thickness of 1.0 mm, test specimens for Izod impact strength evaluation each having a length of 64.0 mm, a width of 12.7 mm, and a thickness of 4 mm, and test specimens for load deflection temperature evaluation each having a length of 120 mm, a width of 11 mm, and a thickness of 3 mm. The test specimens obtained were evaluated for fire retardancy, Izod impact strength, and deflection temperature under load. The results thereof are shown in Table 1.

(EXAMPLE 1-2)

Molded articles obtained as test specimens for fire retardancy evaluation each having a length of 135 mm, a width of 13 mm, and a thickness of 2.0 mm by injection-molding the pellets obtained in Example 1-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(EXAMPLE 1-3)

Molded articles obtained as test specimens for fire retardancy evaluation each having a length of 135 mm, a width of 13 mm, and a thickness of 3.0 mm by injection-molding the pellets obtained in Example 1-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(EXAMPLE 2-1)

Pellets were produced in the same manner as in Example 1-1, except that (A)-1 was blended with (B)-1 in a mass ratio of 50:50. Subsequently, test specimens were produced and evaluated in the same manners as in Example 1-1. The results thereof are shown in Table 1.

(EXAMPLE 2-2)

Molded articles obtained as test specimens for fire retardancy evaluation each having a length of 135 mm, a width of 13 mm, and a thickness of 2.0 mm by injection-molding the pellets obtained in Example 2-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(EXAMPLE 2-3)

Molded articles obtained as test specimens for fire retardancy evaluation each having a length of 135 mm, a width of 13 mm, and a thickness of 3.0 mm by injection-molding the pellets obtained in Example 2-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(EXAMPLE 3-1)

(A)-2 and (B)-1 were dry-blended with each other in a mass ratio of 60:40, and pellets were thereafter produced in the same manner as in Example 1-1. Subsequently, test specimens were produced and evaluated in the same manners as in Example 1-1, except that the mold temperature during the injection molding was changed to about 90°C. The results thereof are shown in Table 1.

(EXAMPLE 3-2)

Molded articles obtained as test specimens for fire retardancy evaluation each having a length of 135 mm, a width of 13 mm, and a thickness of 2.0 mm by injection-molding the pellets obtained in Example 3-1, using injection-molding machine IS50E (screw diameter, 25 mm), manufactured by Toshiba Machine Co., Ltd., under the conditions of a cylinder temperature of 230°C and a mold temperature of about 90°C are presumed to have a fire retardancy rating of V-0.

(EXAMPLE 3-3)

Molded articles obtained as test specimens for fire retardancy evaluation each having a length of 135 mm, a width of 13 mm, and a thickness of 3.0 mm by injection-molding the pellets obtained in Example 3-1, using injection-molding machine IS50E (screw diameter, 25 mm), manufactured by Toshiba Machine Co., Ltd., under the conditions of a cylinder temperature of 230°C and a mold temperature of about 90°C are presumed to have a fire retardancy rating of V-0.

(EXAMPLE 4-1)

(A)-1, (B)-1 and (C)-1 were dry-blended in a mass ratio of 40:40:20, and pellets were thereafter produced in the same manner as in Example 1-1. Subsequently, test specimens were produced and evaluated in the same manners as in Example 1-1, except that the mold temperature during the injection molding was changed to about 80°C. The results thereof are shown in Table 1.

(EXAMPLE 4-2)

Molded articles obtained as test specimens for fire retardancy evaluation each having a length of 135 mm, a width of 13 mm, and a thickness of 2.0 mm by injection-molding the pellets obtained in Example 4-1, using injection-molding machine IS50E (screw diameter, 25 mm), manufactured by Toshiba Machine Co., Ltd., under the conditions of a cylinder temperature of 230°C and a mold temperature of about 80°C are presumed to have a fire retardancy rating of V-0.

(EXAMPLE 4-3)

Molded articles obtained as test specimens for fire retardancy evaluation each having a length of 135 mm, a width of 13 mm, and a thickness of 3.0 mm by injection-molding the pellets obtained in Example 4-1, using injection-molding machine IS50E (screw diameter, 25 mm), manufactured by Toshiba Machine Co., Ltd., under the conditions of a cylinder temperature of 230°C and a mold temperature of about 80°C are presumed to have a fire retardancy rating of V-0.

(COMPARATIVE EXAMPLE 1-1)

Pellets were produced in the same manner as in Example 1-1, except that (A)-1 was blended with (B)-1 in a mass ratio of 30:70. Subsequently, test specimens were produced and evaluated in the same manners as in Example 1-1. The results thereof are shown in Table 1.

(COMPARATIVE EXAMPLE 1-2)

Molded articles obtained as test specimens for fire retardancy evaluation each having a length of 135 mm, a width of 13 mm, and a thickness of 2.0 mm by injection-molding the pellets obtained in Comparative Example 1-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(COMPARATIVE EXAMPLE 1-3)

Molded articles obtained as test specimens for fire retardancy evaluation each having a length of 135 mm, a width of 13 mm, and a thickness of 3.0 mm by injection-molding the pellets obtained in Comparative Example 1-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-0.

(COMPARATIVE EXAMPLE 2-1)

Test specimens were produced and evaluated in the same manners as in Example 3-1, except that (A)-2 and (B)-1 were blended in a mass ratio of 70:30. The results thereof are shown in Table 1.

(COMPARATIVE EXAMPLE 2-2)

Using injection-molding machine IS50E (screw diameter, 25 mm), manufactured by Toshiba Machine Co., Ltd., the pellets obtained in Comparative Example 2-1 were injection-molded under the conditions of a cylinder temperature of 230°C and a mold temperature of about 90°C to obtain test specimens for fire retardancy evaluation each having a length of 135 mm, a width of 13 mm, and a thickness of 2.0 mm. The fire retardancy of the molded articles was below the standard. Namely, the test specimens were burned out.

(COMPARATIVE EXAMPLE 2-3)

Using injection-molding machine IS50E (screw diameter, 25 mm), manufactured by Toshiba Machine Co., Ltd., the pellets obtained in Comparative Example 2-1 were injection-molded under the conditions of a cylinder temperature of 230°C and a mold temperature of about 90°C to obtain test specimens for fire retardancy evaluation each having a length of 135 mm, a width of 13 mm, and a thickness of 3.0 mm. The fire retardancy of the molded articles was below the standard. Namely, the test specimens were burned out.

(COMPARATIVE EXAMPLE 3-1)

(A)-3 and (B)-1 were dry-blended with each other in a mass ratio of 60:40, and pellets were thereafter produced in the same manner as in Example 1-1. Subsequently, test specimens were produced and evaluated in the same manners as in Example 1-1, except that the mold temperature during the injection molding was changed to about 110°C. The results thereof are shown in Table 1.

(COMPARATIVE EXAMPLE 3-2)

Molded articles obtained as test specimens for fire retardancy evaluation each having a length of 135 mm, a width of 13 mm, and a thickness of 2.0 mm by injection-molding the pellets obtained in Comparative Example 3-1, using injection-molding machine IS50E (screw diameter, 25 mm), manufactured by Toshiba Machine Co., Ltd., under the conditions of a cylinder temperature of 230°C and a mold temperature of about 110°C are presumed to have a fire retardancy rating of V-0.

(COMPARATIVE EXAMPLE 3-3)

Molded articles obtained as test specimens for fire retardancy evaluation each having a length of 135 mm, a width of 13 mm, and a thickness of 3.0 mm by injection-molding the pellets obtained in Comparative Example 1-1, using injection-molding machine IS50E (screw diameter, 25 mm), manufactured by Toshiba Machine Co., Ltd., under the conditions of a cylinder temperature of 230°C and a mold temperature of about 110°C are presumed to have a fire retardancy rating of V-0.

(COMPARATIVE EXAMPLE 4-1)

Test specimens were produced and evaluated in the same manners as in Example 1-1, except that (B)-2 was used as a flame retardant in place of (B)-1 and that (A)-1 and (B)-2 were blended in a mass ratio of 60:40. The results thereof are shown in Table 1.

(COMPARATIVE EXAMPLE 4-2)

Molded articles obtained as test specimens for fire retardancy evaluation each having a length of 135 mm, a width of 13 mm, and a thickness of 2.0 mm by injection-molding the pellets obtained in Comparative Example 4-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-2.

(COMPARATIVE EXAMPLE 4-3)

Molded articles obtained as test specimens for fire retardancy evaluation each having a length of 135 mm, a width of 13 mm, and a thickness of 3.0 mm by injection-molding the pellets obtained in Comparative Example 4-1, using injection-molding machine IS50E (screw diameter, 25 mm), manufactured by Toshiba Machine Co., Ltd., under the conditions of a cylinder temperature of 230°C and a mold temperature of about 70°C are presumed to have a fire retardancy rating of V-2.

[Table 1]

[Table 1]

| Materials and blending ratio by mass | Example 1-1 | Example 2-1 | Example 3-1 | Example 4-1 | Comparative Example 1-1 | Comparative Example 2-1 | Comparative Example 3-1 | Comparative Example 4-1 |
|---|---|---|---|---|---|---|---|---|
| (A)-1 ISB/ CHDM=30/70 | 60 | 50 | | 40 | 30 | | | 60 |
| (A)-2 ISB/ CHDM=50/50 | | | 60 | | | 70 | | |
| (A)-3 ISB/ CHDM=70/30 | | | | | | | 60 | |
| (B)-1 FIRE CUT | 40 | 50 | 40 | 40 | 70 | 30 | 40 | |
| (B)-2 Exolit OP930 | | | | | | | | 40 |
| (C)-1 Iupilon | | | | 20 | | | | |
| Impact resistance (Izod impact strength, $kJ/m^2$) | 6.2 | 5.8 | 5.4 | 7.2 | 3.2 | 6.2 | 4.5 | 5.4 |
| Fire retardancy (UL94 V; thickness, 1.0 mm) | V-0 | V-0 | V-0 | V-0 | V-0 | V-2 | V-0 | V-2 |
| Heat resistance (deflection temperature under load, °C) | 65 | 66 | 87 | 73 | 68 | 85 | 98 | 65 |

As apparent from Table 1, etc., the resin compositions of the invention produced in the Examples are excellent in terms of all of fire retardancy, impact resistance and heat resistance. On the other hand, the resin compositions produced in the Comparative Examples are insufficient in fire retardancy, i.e., the fire retardancy is below the standard or is a rating of V-2 (Comparative Examples 2-1 to 2-3 and 4-1 to 4-3), or are insufficient in impact resistance (Comparative Examples 1-1 to 1-3 and 3-1 to 3-3). Namely, the comparative resin compositions are inferior in performance to the resin compositions of the invention.

While the invention has been described in detail and with reference to specific embodiments thereof, it will be apparent to one skilled in the art that various changes and modifications can be made therein without departing from the spirit and scope thereof. This application is based on a Japanese patent application filed on October 29, 2010 (Application No. 2010-244342, the contents thereof being incorporated herein by reference.

## Claims

1. A resin composition, comprising:

a polycarbonate resin (A) that contains structural units (a) derived from a dihydroxy compound having a portion represented by the following formula (1) as a part of a structure thereof; and
a flame retardant (B) that contains phosphorus and nitrogen,
wherein a test specimen produced from the resin composition in accordance with JIS K7110 has an Izod impact strength of 5.0 kJ/$m^2$ or higher, and
a molded article having a thickness of 3.0 mm obtained by molding the resin composition has a rating of V-0 in a UL94 vertical burning test:

[Chem. 1]

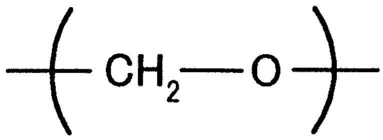

(1)

(provided that a case where the portion represented by formula (1) is a part of $-CH_2-O-H$ is excluded.)

2. The resin composition according to claim 1,
wherein a molded article having a thickness of 2.0 mm obtained by molding the resin composition has a rating of V-0 in a UL94 vertical burning test.

3. The resin composition according to claim 1 or 2,
wherein a molded article having a thickness of 1.0 mm obtained by molding the resin composition has a rating of V-0 in a UL94 vertical burning test.

4. The resin composition according to any one of claims 1 to 3,
wherein the dihydroxy compound is a dihydroxy compound represented by the following formula (2):

[Chem. 2]

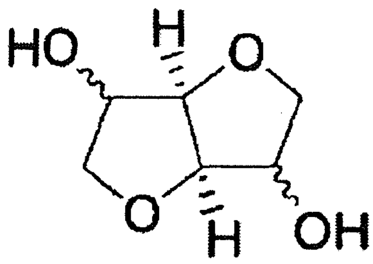

(2)

.

**5.** The resin composition according to any one of claims 1 to 4, wherein the polycarbonate resin (A) has a glass transition temperature of 75 to 140°C.

**6.** The resin composition according to any one of claims 1 to 5, wherein the polycarbonate resin (A) contains the structural units (a) in an amount of 60% by mole or less.

**7.** The resin composition according to any one of claims 1 to 6, wherein a proportion of the flame retardant (B) in a mixture of the polycarbonate resin (A) and the flame retardant (B) is 35 to 60% by mass.

**8.** The resin composition according to any one of claims 1 to 7, wherein the flame retardant (B) has a phosphorus content of 20 to 35% by mass and a nitrogen content of 10 to 25% by mass.

**9.** The resin composition according to any one of claims 1 to 8, wherein the polycarbonate resin (A) further contains structural units (b) derived from cyclohexanedimethanol.

**10.** The resin composition according to claim 9, wherein the polycarbonate resin (A) contains the structural units (b) in an amount of 40 to 80% by mole.

**11.** The resin composition according to any one of claims 1 to 10, further comprising:

an aromatic polycarbonate resin (C),
wherein the resin composition has a single glass transition temperature, and
the glass transition temperature is not lower than a glass transition temperature of the polycarbonate resin (A) and not higher than a glass transition temperature of the aromatic polycarbonate resin (C).

**12.** The resin composition according to claim 11, wherein a proportion of the aromatic polycarbonate resin (C) in a mixture of the polycarbonate resin (A), the flame retardant (B) and the aromatic polycarbonate resin (C) is 5 to 50% by mass.

**13.** A film, which is obtained by molding the resin composition according to any one of claims 1 to 12.

**14.** A plate, which is obtained by molding the resin composition according to any one of claims 1 to 12.

**15.** An injection-molded article, which is obtained by molding the resin composition according to any one of claims 1 to 12.

## INTERNATIONAL SEARCH REPORT

International application No.
PCT/JP2011/068963

A. CLASSIFICATION OF SUBJECT MATTER
*C08L69/00*(2006.01)i, *C08G64/02*(2006.01)i, *C08K3/32*(2006.01)i, *C08K5/3492*(2006.01)i

According to International Patent Classification (IPC) or to both national classification and IPC

B. FIELDS SEARCHED

Minimum documentation searched (classification system followed by classification symbols)
C08L69/00, C08G64/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2008/149872 A1 (Teijin Ltd.), 11 December 2008 (11.12.2008), claims; description, page 3, lines 22 to 26; page 6, line 9 to page 7, line 19; page 18, line 22 to page 20, line 24; page 28, lines 2 to 5; examples & US 2010/0184884 A1 & EP 2154199 A1 & CN 101679738 A & KR 10-2010-0017479 A | 1-15 |
| Y | WO 2007/148604 A1 (Mitsubishi Chemical Corp.), 27 December 2007 (27.12.2007), claims; paragraphs [0008], [0022], [0046], [0053], [0056], [0057], [0119]; examples; paragraph [0202] & JP 2008-24919 A & US 2010/0190953 A1 & EP 2033981 A1 & EP 2305734 A1 & KR 10-2009-0018788 A & CN 101448871 A | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October, 2011 (05.10.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/068963

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-161746 A (Mitsubishi Chemical Corp.), 23 July 2009 (23.07.2009), claims; paragraphs [0025], [0081], [0087], [0090], [0091], [0147]; examples; paragraph [0271] & US 2011/0003101 A1 & EP 2223951 A1 & WO 2009/075304 A1 & KR 10-2010-0096157 A & CN 101896536 A | 1-15 |
| A | JP 2003-292603 A (Matsushita Electric Industrial Co., Ltd.), 15 October 2003 (15.10.2003), entire text (Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1079686 A
- JP 56055425 A
- WO 2004111106 A
- JP 6145336 A
- JP 63012896 B
- WO 2008149872 A
- JP 2009249621 A
- JP 2010001362 A
- WO 2007148604 A
- JP 2010244342 A